# EUROPEAN PATENT SPECIFICATION

(11) **EP 2 976 754 B1**
(45) Date of publication and mention of the grant of the patent: **22.01.2020**
(21) Application number: 14724822.3
(22) Date of filing: 12.03.2014
(51) Int. Cl.: G07C 9/00

(54) **ELECTRONIC LOCK WITH SELECTABLE POWER SOURCES**
ELEKTRONISCHES SCHLOSS MIT WÄHLBAREN ENERGIEQUELLEN
VERROU ÉLECTRONIQUE DOTÉ DE SOURCES D'ÉNERGIE SÉLECTIONNABLES

(30) Priority: 22.03.2013 US 201361804432 P
(43) Date of publication of application: 27.01.2016
(73) Proprietor: UTC Fire & Security Americas Corporation, Inc., Bradenton, FL 34202 (US)
(72) Inventor: SOLDNER, Nicholas Charles, East Hartford, Connecticut 06108 (US); KHIRE, Ritesh, East Hartford, Connecticut 06108 (US); MARCHIORI, Alan, East Hartford, Connecticut 06108 (US); LAKAMRAJU, Vijaya Ramaraju, East Hartford, Connecticut 06108 (US); KUENZI, Adam, Salem, Oregon 97302-1142 (US); LARSON, Wayne, Salem, Oregon 97302-1142 (US); ZACCHIO, Joseph, East Hartford, Connecticut 06108 (US)
(74) Representative: Dehns
(86) International application number: PCT/US2014/023880
(87) International publication number: WO 2014/150649

(56) References cited:
- EP-A2- 1 564 689
- DE-A1-102009 013 650
- FR-A1- 2 776 412
- US-A- 6 000 609
- US-A1- 2010 308 957
- US-A1- 2011 050 391
- US-A1- 2012 108 168

## Description

### BACKGROUND

Mechanical removable lock cores are prevalent in use. The small format interchangeable core (SFIC) is an example of such a mechanical removable lock core. Lock cores may be used in a number of applications, such as doors, cabinets, and other entities or devices that have an ability to accept a mechanical removable lock core. Traditional lock cores use a first key for standard operation by users and a second key for operation by, e.g., facility security managers. The second key may be used to remove the lock core.

Some lock cores utilize an electromechanical actuator within the core that is operable through the use of an electronic key. Use of an electromechanical core and electronic key provides for convenience in terms of allowing a reprogramming of user access remotely (e.g., rekeying) without a need to physically remove a core. However, a user is still required to carry a key.

Keys are subject to being lost or broken, which may further represent a security risk and/or administrative inconvenience to replace a key.

Exemplary locks are described in US 2012/108168, EP1564689, DE102009013650 and US6000609.

### BRIEF SUMMARY

The present invention is directed to a removable lock core as claimed in claim 1. Further advantageous arrangements of the present invention are described in the dependent claims 2-6.

Embodiments of the present invention are described below.

### BRIEF DESCRIPTION OF THE DRAWINGS

The present disclosure is illustrated by way of example and not limited in the accompanying figures in which like reference numerals indicate similar elements.
FIG. 1 is a schematic block diagram illustrating an exemplary computing system in accordance with one or more embodiments;
FIG. 2 illustrates an exemplary circuit in accordance with one or more embodiments; and
FIG. 3 illustrates a flow chart of an exemplary method in accordance with one or more embodiments.

### DETAILED DESCRIPTION

It is noted that various connections are set forth between elements in the following description and in the drawings (the contents of which are included in this disclosure by way of reference). It is noted that these connections in general and, unless specified otherwise, may be direct or indirect and that this specification is not intended to be limiting in this respect. In this respect, a coupling between entities may refer to either a direct or an indirect connection.

Exemplary embodiments of apparatuses, systems, and methods are described for improving a user experience with lock cores by removing a need for a physical key, such as a mechanical or electronic key. In some embodiments, a lock core may be self-powered, and a state of the lock (e.g., locked or unlocked) may be determined based on a wireless communication. For example, a user may operate the lock core based on a device that the user normally has in her possession, such as a mobile phone. The lock may include an internal power source for normal operations, as well as a rechargeable storage element which may allow the lock to be powered from one or more external sources (e.g., external wireless sources). Powering the lock from an external source may be used for management or emergency purposes, or may be performed to remove the lock. Aspects of the disclosure may be applied in connection with an electromechanical replaceable lock core, a standard electronic lock, etc.

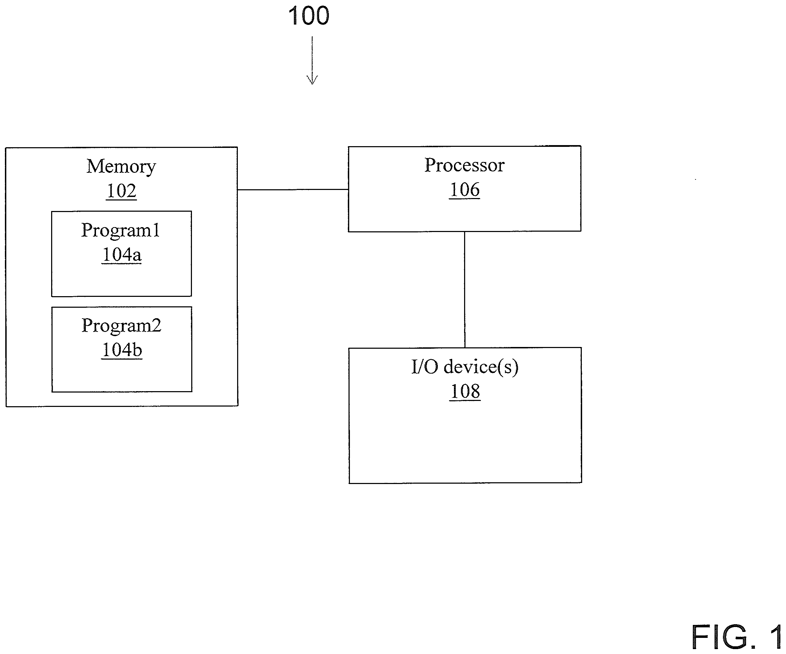

Referring to FIG. 1, an exemplary computing system 100 is shown. The system 100 is shown as including a memory 102. The memory 102 may store executable instructions. The executable instructions may be stored or organized in any manner and at any level of abstraction, such as in connection with one or more processes, routines, procedures, methods, etc. As an example, at least a portion of the instructions are shown in FIG. 1 as being associated with a first program 104a and a second program 104b.

The instructions stored in the memory 102 may be executed by one or more processors, such as a processor 106. The processor 106 may be coupled to one or more input/output (I/O) devices 108. In some embodiments, the I/O device(s) 108 may include one or more of a keyboard or keypad, a touchscreen or touch panel, a display screen, a microphone, a speaker, a mouse, a button, a remote control, a joystick, a printer, a telephone or mobile device (e.g., a smartphone), etc. The I/O device(s) 108 may be configured to provide an interface to allow a user to interact with the system 100.

The system 100 is illustrative. In some embodiments, one or more of the entities may be optional. In some embodiments, additional entities not shown may be included. For example, in some embodiments the system 100 may be associated with one or more networks. In some embodiments, the entities may be arranged or organized in a manner different from what is shown in FIG. 1. One or more of the entities shown in FIG. 1 may be associated with one or more of the devices or entities described herein.

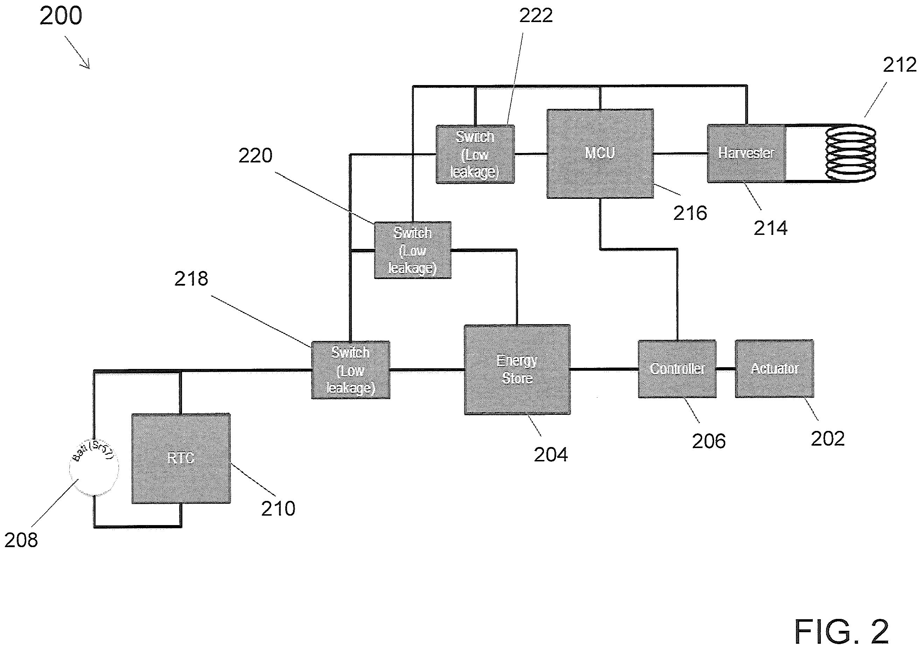

FIG. 2 illustrates an exemplary circuit architecture 200. As described further below, the circuit 200 may be used to selectively power a lock or lock core using an internal power source or an external power source. The external power source may include a wireless power source, and is a mobile phone. In some arrangements not in accordance with the present invention, the external power source may include a thermal source or a light source.

The circuit 200 may include an actuator 202. The actuator 202 may correspond to an electromechanical device. The actuator 202 may receive power or energy from an energy store 204 by way of a controller 206. The actuator 202 may be responsible for controlling a state (e.g., locked or unlocked) of a lock. The actuator 202 may include a motor or motor drive components. The controller 206 may ensure that the actuator 202 is placed in an appropriate state or position.

The energy store 204 may directly power the controller 206 and actuator 202. The energy store 204 may be driven by an internal power source or an external power source. The energy store 204 may include one or more super-capacitors or capacitors featuring relatively minimal resistance. Alternatively, the energy store 204 may include lower quality or higher-resistance capacitors. A design decision may be made regarding a capacity or responsiveness of the energy store 204 relative to a size or type of the components used. For example, smaller components (e.g., capacitors) may be used in embodiments where a lock core is implemented using a small form factor, which may tend to increase response times. Conversely, larger components (e.g., capacitors) may be used in embodiments where fast response times at needed, potentially at the expense/cost of an increased form factor for the lock core. Components may be selected or sized in order to reduce or minimize power draw or power consumption. For example, components may be selected to provide for a small idle or sleep current. For example, a sleep current of approximately 200nA-3uA may be provided, or a sleep current within an order of magnitude of 1uA.

The internal power source may include a primary energy storage element. The primary energy storage element includes a battery 208. In addition to providing power or energy to the energy store 204, the battery 208 may power a real-time clock (RTC) 210. The RTC 210 may be used for data logging purposes or may be used to determine when a particular user should be able to change the state of the lock. The RTC 210 may be implemented using the MCU 216 to reduce the space required by the circuit 200.

The external power source, which may be illustratively represented by a (coupling) coil 212 in FIG. 2, is associated with an external device, such as a wireless device that a user typically has in her possession. The wireless device comprises a mobile phone (e.g., a smartphone). Power provided by the wireless device 212 may be obtained by a harvester 214 for potential use or collection by the energy store 204. Power transfer may also be enabled through use of propagating waves using either a coil or standard antenna as a physical interface.

The circuit 200 may include a processing device, such as a PIC or MSP-class device, a digital signal processor, or microcontroller unit (MCU) 216. In some embodiments, the MCU 216 may correspond to the processor 106 and/or the memory 102 of FIG. 1. The MCU 216 may determine which power source (e.g., internal power or external power) should be used by the energy store 204 to power and control the controller 206 and/or the actuator 202. The MCU 216 may also be used to control the actuator 202 through analog or digital ports.

In some embodiments, the MCU 216 may select the harvester 214 to provide energy to the actuator 202 when the primary energy storage element (e.g., the battery 208) provides energy in an amount less than a threshold or is depleted. In some instances, temperature may dictate selection of the harvester 214. For example, when it is cold outside, the battery 208 might not be able to provide sufficient energy. Energy provided to the actuator 202 by the harvester 214 may be used to remove a lock core so that the battery 208 can be replaced.

The circuit 200 may include one or more switches, such as switches 218, 220, and 222. The switch 218 may be used to selectively provide power from the internal power source or battery 208 to the energy store 204. The switch 220 may be used to selectively provide power from the external power source 212, via the harvester 214, to the energy store 204. The switch 222 may be used to selectively power the MCU 216 from the external power source 212 via the harvester 214, which may be used, for example, when the battery 208 is depleted.

The circuit 200 is illustrative. In some embodiments, one or more of the entities may be optional (e.g., RTC 210). In some embodiments, additional entities not shown may be included. For example, in some embodiments the circuit may include a transceiver (e.g., a wireless transceiver) that may be configured to engage in one or more communications (e.g., one or more encrypted communications) with one or more devices (e.g., a mobile device or phone). In some embodiments, the entities may be arranged or organized in a manner different from what is shown in FIG. 2.

As described above, the operation of a lock may be controlled via a user's mobile device. Thus, the user might not have to carry a separate mechanical or electronic key specifically devoted to operating the lock. The lock core may be a standalone unit that may be self-powered, with an ability to harvest energy from an external source. The external source may be the user's mobile device. The harvesting may occur using one or more techniques or schemes. For example, the harvesting may be based on a near field communication (NFC) or operate at standard ISM frequencies (e.g. 900 MHz, 2.4 GHz etc.). The harvesting may allow the lock core to be removed, potentially in connection with an emergency.

In some embodiments, the lock core may maintain a data log or trail. The data may be accessed or viewed by a device or location that is remote from the lock core. More generally, the lock core may engage in communications (e.g., encrypted communications) with one or more devices or entities.

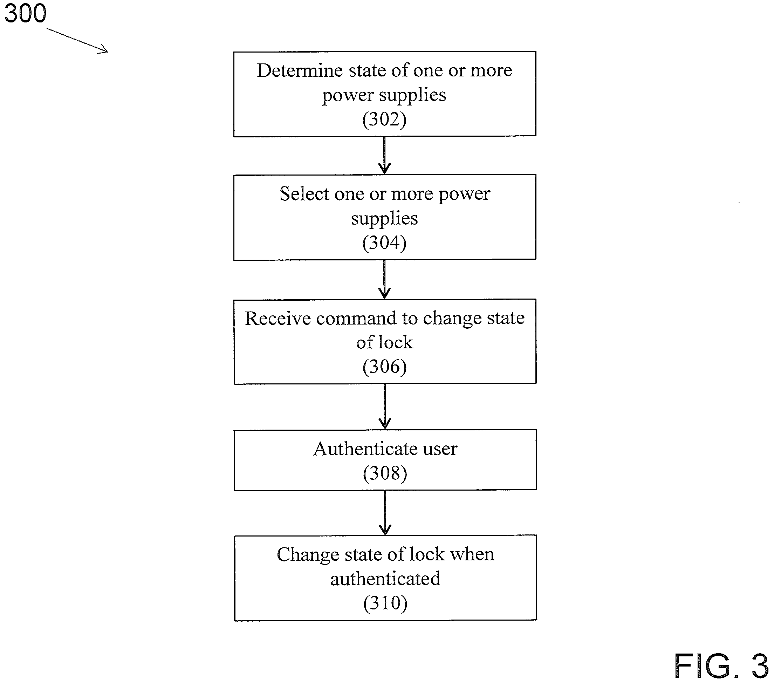

Turning now to FIG. 3, a flow chart of an exemplary method 300 is shown. The method 300 may be executed by one or more systems, circuits, devices, or components, such as those described herein. The method 300 may be used to power an actuator (e.g., actuator 202 of FIG. 2) that may be used to select a state for a lock, wherein the power may be derived from an internal power source or an external power source.

In block 302, a determination may be made regarding a state of one or more power supplies. For example, a determination may be made whether power provided by an internal power supply is available in an amount greater than a threshold or in an amount that is greater than an external power supply.

In block 304, one or more power supplies to use may be selected. For example, if the determination of block 302 indicates that the internal power supply is capable of providing power in the amount greater than the threshold then the internal power supply may be used. Otherwise, an external power supply may be used if such external power supply is available. External power may be harvested from a mobile phone associated with a user. In some arrangements not in accordance with the present invention, external power may be harvested based on mechanical energy (e.g., a push to charge type of lock).

In block 306, a command may be received to change a state of the lock. For example, if the lock is in a locked state, the command of block 306 may direct the lock to unlock. The command may be received from a device associated with a user, such as a mobile device or a phone. The command may include one or more credentials or identifiers that may indicate whether the user has been provided access rights to control or change the state of the lock.

In block 308, the user may be authenticated. For example, if the command of block 306 includes one or more credentials, the one or more credentials may be compared to a listing of authorized users to determine whether the command should allow the state of the lock to change.

If the user is authenticated in block 308, then the lock may change state in block 310. As part of block 310, an entry in a data log may be generated. The entry may specify one or more of the date and time that the command for changing the state of the lock was received, whether the state of the lock was changed, the state that the lock was changed from or to, and an identity of the user or a device associated with the user.

The method 300 is illustrative. In some embodiments, one or more of the blocks or operations (or portions thereof) may be optional. In some embodiments, additional operations not shown may be included. In some embodiments, the operations may execute in an order or sequence different from what is shown.

In some embodiments, access to a lock or lock core may be a function of an amount of energy provided by a primary energy storage element (e.g., a battery) and a level associated with a user attempting to access the lock/lock core. For example, if an amount of energy provided by the primary energy storage element is less than a threshold, a general user might be precluded access, such that only "supervisory-level" users can use the battery for normal operation down to a certain battery level or certain number of operations, followed by certain authorized keys being able to open and/or remove the lock using, e.g., inductive coupling.

Embodiments of the disclosure may be tied to one or more particular machines. For example, one or more devices, apparatuses, systems, or architectures may be configured to power a lock core or actuator using an internal power source (e.g., a battery) or an external power source (e.g., power harvested from a device associated with a user).

Embodiments of the disclosure may provide for a flexible architecture that allows a seamless power transfer from an internal power source to an external power source (and vice versa). In some embodiments, an electromechanical replaceable lock core may include a circuit to facilitate such power transfer. Regardless of which power source is used, the same level of security or authentication may be adhered to, resulting in no loss of functionality.

As described herein, in some embodiments various functions or acts may take place at a given location and/or in connection with the operation of one or more apparatuses, systems, or devices. For example, in some embodiments, a portion of a given function or act may be performed at a first device or location, and the remainder of the function or act may be performed at one or more additional devices or locations.

Embodiments may be implemented using one or more technologies. In some embodiments, an apparatus or system may include one or more processors, and memory storing instructions that, when executed by the one or more processors, cause the apparatus or system to perform one or more methodological acts as described herein. Various mechanical components known to those of skill in the art may be used in some embodiments.

Embodiments may be implemented as one or more apparatuses, systems, and/or methods. In some embodiments, instructions may be stored on one or more computer-readable media, such as a transitory and/or non-transitory computer-readable medium. The instructions, when executed, may cause an entity (e.g., an apparatus or system) to perform one or more methodological acts as described herein.

Aspects of the disclosure have been described in terms of illustrative embodiments thereof. Numerous other embodiments, modifications and variations within the scope of the appended claims will occur to persons of ordinary skill in the art from a review of this disclosure.

## Claims

1. A removable lock core comprising:
a primary energy storage element (208);
a harvester (214) configured to harvest energy from a source located external from the removable lock core;
an actuator (202) configured to control a state of a lock associated with the removable lock core;
an energy store (204) configured to selectively receive energy from the primary energy storage element (208) or from the harvester (214) and provide energy to the actuator (202); and
a processing device (216) configured to select whether the energy store (204) receives energy from the primary energy storage element (208) or the harvester (214) to provide the energy to the actuator (202);
wherein the primary energy storage element (208) comprises a battery;
wherein the processing device (216) is configured to select the harvester (214) as the power source to be used by the energy store (204) to provide the energy to the actuator (202) when the battery provides energy in an amount less than a threshold, and wherein the energy provided to the actuator (202) by the energy store (204) using the harvester (214) is used to remove the core so that the battery can be replaced;
wherein the source located external from the removable lock core comprises a mobile phone; and
wherein the removable lock core comprises a transceiver configured to receive a command from the mobile phone to change a state of the lock, wherein the command comprises at least one credential, and wherein the removable lock core is configured to change a state of the lock based on an authentication of the at least one credential.

2. The removable lock core of claim 1, wherein the processing device (216) comprises at least one of a PIC, an MSP-class device, a digital signal processor, and a microcontroller unit (MCU).

3. The removable lock core of claim 1 or 2, further comprising:
a first switch configured to selectively provide energy from the primary energy storage element (208) to the energy store (204); and
a second switch configured to selectively provide energy from the harvester (214) to the energy store (204).

4. The removable lock core of claim 3, further comprising:
a third switch configured to selectively provide energy from the harvester (214) to the processing device (216).

5. The removable lock core of any preceding claim, wherein the energy store (204) comprises a super-capacitor.

6. The removable lock core of any preceding claim, wherein access to the lock core is a function of an amount of energy provided by the battery and a supervisory level associated with a user attempting to access the lock core, wherein when the battery energy is less than threshold, only supervisory level users can operate the lock.

## Patentansprüche

1. Entfernbarer Schlosskern, der Folgendes umfasst:
ein primäres Energiespeicherelement (208);
eine Sammelvorrichtung (214), die dazu konfiguriert ist, Energie von einer Quelle zu sammeln, die sich außerhalb des entfernbaren Schlosskerns befindet;
einen Aktuator (202), der dazu konfiguriert ist, einen Zustand des Schlosses zu steuern, der mit dem entfernbaren Schlosskern assoziiert ist;
einen Energiespeicher (204), der dazu konfiguriert ist, selektiv Energie von dem primären Energiespeicherelement (208) oder von der Sammelvorrichtung (214) zu empfangen und dem Aktuator (202) Energie bereitzustellen; und
eine Verarbeitungsvorrichtung (216), die dazu konfiguriert ist, auszuwählen, ob der Energiespeicher (204) Energie von dem primären Energiespeicherelement (208) oder der Sammelvorrichtung (214) empfängt, um dem Aktuator (202) Energie bereitzustellen;
wobei das primäre Energiespeicherelement (208) eine Batterie umfasst;
wobei die Verarbeitungsvorrichtung (216) dazu konfiguriert ist, die Sammelvorrichtung (214) als die Leistungsquelle auszuwählen, die von dem Energiespeicher (204) verwendet werden soll, um dem Aktuator (202) die Energie bereitzustellen, wenn die Batterie Energie in einer Menge bereitstellt, die geringer als ein Schwellenwert ist, und wobei die Energie, die dem Aktuator (202) von dem Energiespeicher (204) unter Verwendung der Sammelvorrichtung (214) bereitgestellt wird, verwendet wird, um den Kern zu entfernen, sodass die Batterie ersetzt werden kann;
wobei die Quelle, die sich außerhalb des entfernbaren Schlosskerns befindet, ein Mobiltelefon umfasst; und
wobei der entfernbare Schlosskern einen Sendeempfänger umfasst, der dazu konfiguriert ist, einen Befehl, den Zustand des Schlosses zu ändern, von dem Mobiltelefon zu empfangen, wobei der Befehl mindestens eine Anmeldeinformation umfasst, und wobei der entfernbare Schlosskern dazu konfiguriert ist, einen Zustand des Schlosses auf Grundlage einer Authentifizierung der mindestens einen Anmeldeinformation zu ändern.

2. Entfernbarer Schlosskern nach Anspruch 1, wobei die Verarbeitungsvorrichtung (216) mindestens eines von einer PIC, einer MSP-Klasse-Vorrichtung, einem Digitalsignalprozessor und einer Mikrosteuerungseinheit (MCU) umfasst.

3. Entfernbarer Schlosskern nach Anspruch 1 oder 2, ferner umfassend:
einen ersten Schalter, der dazu konfiguriert ist, dem Energiespeicher (204) selektiv Energie von dem primären Energiespeicherelement (208) bereitzustellen; und
einen zweiten Schalter, der dazu konfiguriert ist, dem Energiespeicher (204) selektiv Energie von der Sammelvorrichtung (214) bereitzustellen.

4. Entfernbarer Schlosskern nach Anspruch 3, ferner umfassend:
einen dritten Schalter, der dazu konfiguriert ist, der Verarbeitungsvorrichtung (216) selektiv Energie von der Sammelvorrichtung (214) bereitzustellen.

5. Entfernbarer Schlosskern nach einem der vorhergehenden Ansprüche, wobei der Energiespeicher (204) einen Superkondensator umfasst.

6. Entfernbarer Schlosskern nach einem der vorhergehenden Ansprüche, wobei es sich bei einem Zugang zu dem Schlosskern um eine Funktion einer Menge von Energie, die durch die Batterie bereitgestellt wird, und einer Aufsichtsstufe handelt, die mit dem Benutzer assoziiert ist, der versucht, Zugang zu dem Schlosskern zu bekommen, wobei, wenn die Batterieenergie geringer ist als ein Schwellenwert, nur Aufsichtsstufe-Benutzer das Schloss bedienen können.

## Revendications

1. Noyau de verrou amovible comprenant :
un élément de stockage d'énergie primaire (208) ;
un dispositif de captage (214) configuré pour capter de l'énergie à partir d'une source située à l'extérieur du noyau de verrou amovible ;
un actionneur (202) configuré pour commander un état d'un verrou associé au noyau de verrou amovible ;
un dispositif d'emmagasinage d'énergie (204) configuré pour recevoir de manière sélective de l'énergie à partir de l'élément de stockage d'énergie primaire (208) ou à partir du dispositif de captage (214) et pour fournir de l'énergie à l'actionneur (202) ; et
un dispositif de traitement (216) configuré pour sélectionner si le dispositif d'emmagasinage d'énergie (204) reçoit de l'énergie à partir de l'élément de stockage d'énergie primaire (208) ou du dispositif de captage (214) pour fournir l'énergie à l'actionneur (202) ;
dans lequel l'élément de stockage d'énergie primaire (208) comprend une batterie ;
dans lequel le dispositif de traitement (216) est configuré pour sélectionner le dispositif de captage (214) comme la source d'alimentation à utiliser par le dispositif d'emmagasinage d'énergie (204) pour fournir de l'énergie à l'actionneur (202) quand la batterie fournit de l'énergie dans une quantité inférieure à un seuil, et dans lequel l'énergie fournie à l'actionneur (202) par le dispositif d'emmagasinage d'énergie (204) en utilisant le dispositif de captage (214) est utilisé pour retirer le noyau de manière que la batterie puisse être remplacée ;
dans lequel la source située à l'extérieur du noyau de verrou amovible comprend un téléphone mobile ; et
dans lequel le noyau de verrou amovible comprend un émetteur-récepteur configuré pour recevoir une commande à partir du téléphone mobile pour changer un état du verrou, dans lequel la commande comprend au moins un justificatif et dans lequel le noyau de verrou amovible est configuré pour changer un état du verrou sur la base d'une authentification de l'au moins un justificatif.

2. Noyau de verrou amovible selon la revendication 1, dans lequel le dispositif de traitement (216) comprend au moins un parmi un PIC, un dispositif de classe MSP, un processeur de signal numérique et une unité de microcontrôleur (MCU).

3. Noyau de verrou amovible selon la revendication 1 ou 2, comprenant en outre :
un premier commutateur configuré pour fournir de manière sélective de l'énergie de l'élément de stockage d'énergie primaire (208) au dispositif d'emmagasinage d'énergie (204) ; et
un deuxième commutateur configuré pour fournir de manière sélective de l'énergie du dispositif de captage (214) au dispositif d'emmagasinage d'énergie (204).

4. Noyau de verrou amovible selon la revendication 3, comprenant en outre :
un troisième commutateur configuré pour fournir de manière sélective de l'énergie du dispositif de captage (214) au dispositif de traitement (216).

5. Noyau de verrou amovible selon une quelconque revendication précédente, dans lequel le dispositif d'emmagasinage d'énergie (204) comprend un supercondensateur.

6. Noyau de verrou amovible selon une quelconque revendication précédente, dans lequel un accès au noyau de verrou est une fonction d'une quantité d'énergie fournie par la batterie et d'un niveau de supervision associé à un utilisateur tentant d'accéder au noyau de verrou, dans lequel, quand l'énergie de batterie est inférieure à un seuil, seuls des utilisateurs de niveau de supervision peuvent actionner le verrou.
